# EUROPÄISCHE PATENTANMELDUNG

(11) **EP 2 369 077 A1**
(43) Veröffentlichungstag der Anmeldung: **28.09.2011**
(21) Anmeldenummer: 10157469.7
(22) Anmeldetag: 24.03.2010
(51) Int. Cl.: E04B 1/76, D06M 11/71, D06M 11/79

(54) **Dämmmaterial**

(71) Anmelder: Thöne, Gerd, 32105 Bad Salzuflen (DE)
(72) Erfinder: Thöne, Gerd, 32105 Bad Salzuflen (DE)
(74) Vertreter: Bauer Vorberg Kayser Patentanwälte

(57) **Zusammenfassung**

Die Erfindung betrifft ein Dämmmaterial aus Wolle. Weiterhin sind Siliziumdioxid und ein Brandschutzmittel mit mehr als 50 Gew.-% Wasser eines Phosphats und eines Netzmittels enthalten.

## Beschreibung

Die vorliegende Erfindung betrifft ein Dämmmaterial, wie es beispielsweise in der Bauindustrie eingesetzt wird. Ein Dämmmaterial oder Dämmstoff ist ein Material mit geringer Wärmeleitung, das z.B. beim Gebäude- und Anlagenbau oder bei der Herstellung von Kühlschränken, Gefrierschränken und ähnlichem zur Wärmedämmung eingesetzt wird. Außerdem können Dämmmaterialien auch schalldämmende oder andere bauphysikalische Eigenschaften aufweisen.

Gebräuchliche Dämmmaterialien sind z.B. geschäumte Kunststoffe, wie Polystyrol, Neopor oder Polyurethan, geschäumte Elastomere auf Basis von Neopren-Kautschuk oder ähnlichen gummiartigen Basismaterialien, anorganischen Dämmstoffe wie Mineralwolle (Steinwolle oder Glaswolle), Blähton, Karlite, Calzium-Silikat-Platten oder geschäumtes Glas sowie Naturdämmstoffe aus nachwachsenden Rohstoffen wie Holzwolle, Schilfrohr oder Cellulose aus Altpapier. Daneben sind lose Dämmmaterialien bekannt, die als Schüttungen lose aufgebracht, als Einblasdämmstoffe in Hohlräume eingebracht oder feucht auf Flächen aufgespritzt werden.

Alle diese Dämmstoffe haben Vor- und Nachteile. Zum einen sind die Kunststoffe, Elastomere und anorganischen Dämmstoffe nur mit relativ hohem Aufwand herzustellen, die natürlichen Dämmstoffe sind dagegen oft nicht wasserabweisend oder nicht ausreichend schwer entflammbar oder anfällig für Insektenbefall.

Die Aufgabe der vorliegenden Erfindung besteht darin, ein weiteres Dämmmaterial bereitzustellen, das im Wesentlichen aus einem natürlichen Material gebildet ist und dennoch die notwendigen Eigenschaften, die an ein Dämmmaterial gestellt werden, aufweist. Die Herstellung sollte dabei kostengünstig möglich sein.

Die Aufgabe wird durch ein Dämmmaterial gelöst, bestehend aus Wolle mit folgenden Zusatzstoffen
- Siliziumdioxid,
- einem Brandschutzmittel in Form einer wässrigen Lösung mit mehr als 50 Gew.-% Wasser eines Phosphats und eines Netzmittels.

Es hat sich gezeigt, dass die Nutzung von Schafwolle besonders vorteilhaft ist, weil diese hervorragende Dämmeigenschaften aufweist, in ausreichenden Mengen zur Verfügung steht und ohnehin bereits schlecht brennt und wasserabweisend ist.

Vorzugsweise wird ein Siliziumdioxid mit Partikeln im Nano-Größenbereich gewählt. Diese Partikel haben eine Korngröße von etwa 10⁻⁹ mm. Sie können von Insekten aufgenommen werden, richten dann aber Schaden durch ihre Scharfkantigkeit an. Insekten vermeiden es deshalb derart imprägnierte Materialien zu fressen. Motten nisten nicht in Wolle, die mit Siliziumdioxid versetzt ist. Es hat sich bei Versuchen gezeigt, dass Fraßverluste an der präparierten Wolle mit 0,2 % äußerst gering ausfallen.

Siliziumdioxid in kristalliner Nanoform verdunstet weder noch löst es sich mechanisch von der Wolle. Siliziumdioxid in Nanoform ist extrem ergiebig, mit nur einem Gramm können etwa 300 m ² Wolle versetzt werden.

Ein besonders vorteilhafter Effekt ergibt sich, wenn der Wolle zusätzlich Lavendelöl oder Chrysantemenauszüge hinzugefügt werden. Diese Stoffe schrecken Motten und andere Insekten zusätzlich ab, in Kombination mit Siliziumdioxid hat sich eine nahezu 100%ige Resistenz gegen Insekten und ähnliche Lebewesen gezeigt. Chrysantemenöle enthalten Pyrethroide, die auch synthetisch herstellbar sind. Diese Pyrethroide oder auch Permethrine sind nicht gesundheitsschädlich und als Zuschlagsstoffe zugelassen.

Als weiterer positiver Effekt hat sich gezeigt, dass Siliziumdioxid in kristalliner Nanoform hydrophob, also wasserabweisend ist. Die Wolle wird deshalb nicht durchnässt, was zum Einen eine Geruchsbelastung verhindert, sich zum anderen aber auch positiv auf die Wärmedämmeigenschaften auswirkt, die ansonsten durch Feuchtigkeit verschlechtert werden.

Die Erfindung macht sich den Umstand bezüglich des Brandschutzmittels zunutze, dass bekanntlicherweise bei der Synthese von Phosphaten aus Phosphorsäure und einem entsprechendem Reaktionspartner, beispielsweise bei der Synthese von Diammoniumphosphat aus Wasser, Phosphorsäure und Ammoniak erheblich Wärme freigesetzt wird. Dem gemäß verläuft die Rückreaktion endotherm, es wird erhebliche Wärme benötigt. Dies kann man dazu nutzen, brennende Stoffe herunter zu kühlen.

Nun hat sich aber heraus gestellt, dass eine normale, wässrige Lösung von Diammoniumphosphaten nicht die gewünschte Abkühlung beim Zersetzen unter Einwirkung einer feuerbedingten Temperatur, die typisch zwischen 400°c und 1000°C liegt, liefert. Erst der Zusatz eines Netzmittels, insbesondere eines Tensids, brachte den gewünschten Erfolg. Es konnte festgestellt werden, dass erheblich Kälte freigesetzt wird, die das brennende Gut herab kühlt.

Die Zugabe eines Netzmittels hat bei der feuerfesten Ausrüstung von brennbaren Gegenständen den großen Vorteil, dass die Benetzung der Oberfläche des zu schützenden Gegenstandes verbessert wird. Trägt man lediglich eine wässrige Lösung eines Phosphats auf die Wolle auf stellt man fest, dass die aufgesprühte Salzlösung nach Antrocknen Kristalle bildet. Ein homogener, geschlossener Überzug wird nicht erreicht, vielmehr nur ein partieller Schutz, der nicht zufriedenstellend ist.

Die Beigabe eines Netzmittels bringt nun aber den Erfolg. Beim Trockenen der aufgebrachten wässrigen Phosphatlösung bilden sich nicht mehr Kristalle, sondern es bleibt eine dünne, deckende Schicht des Phosphatträgers auf der Wolle. Dadurch wird die feuerhemmende Ausrüstung deutlich verbessert.

Das erfindungsgemäße Brandschutzmittel hat den großen Vorteil, ausgesprochen umweltfreundlich zu sein. Phosphate sind bekanntlich Düngemittel. Wenn sie im Außenbereich verwendet werden und durch Regen teilweise oder gänzlich abgewaschen werden, richten sie keinen Schaden an.

Weiterhin wird kein spezielles Lösungsmittel benutzt, vielmehr wird Wasser eingesetzt. Auch in so weit ist das erfindungsgemäße Brandschutzmittel ausgesprochen umweltfreundlich.

Die Erfindung bezieht sich nicht vorrangig auf solche Phosphate, die unter Zufuhr von Wärme einen Schaum bilden, also intumeszierende Eigenschaften haben. Sie bezieht sich auf solche Phosphate, bei denen die beschriebene endotherme Zersetzungsreaktion auftritt.

Bei der Bekämpfung eines Brandherdes hat das erfindungsgemäße Brandschutzmittel als Löschflüssigkeit hervorragende Eigenschaften. Es ist flüssiger als Wasser. Die brennenden Gegenstände werden besser benetzt. Insbesondere aber verdampft die Löschflüssigkeit nicht so wie normales Löschwasser bei hohen, feuerbedingten Temperaturen: Es ist bekannt, dass aufgesprühtes normales Löschwasser bei Brandtemperaturen von mehr als 400°C verdampft, bevor das Löschwasser den zu benetzenden brennenden Gegenstand erreicht, das Wasser hat also verringerte Löschwirkung. Es kann sich bei sehr hohen Temperaturen sogar in Wasserstoff und Sauerstoff zerlegen. Beim Aufsteigen in kühlere Regionen können Wasserstoff und Sauerstoff wieder zu Knallgas verbrennen, was das Feuer anfacht, also der beabsichtigten Löschwirkung zuwider läuft.

Bei der erfindungsgemäßen Löschflüssigkeit wird der zu löschende Gegenstand durch die endotherme Reaktion herunter gekühlt und Löschwasser verdampft nicht in dem Maße, wie dies bei normalem Wasser beobachtet wird. Die brennenden Gegenstände lassen sich daher besser benetzen und somit auch besser löschen.

Mit dem Brandschutzmittel imprägnierte Wolle wird beim Anzünden gekühlt und brennt schlechter, sie läßt sich nicht so einfach entzünden.

Nun sind aber wie oben beschrieben Phosphate und deren Salze wasserlöslich. Bei Anwendung im Außenbereich zur feuerhemmenden Ausrüstung von Gegenständen, beispielsweise Holzaußenflächen, werden die aufgebrachten Schichten nach und nach durch Regenwasser wieder abgewaschen. Dies ist nachteilig. In Weiterentwicklung der Erfindung schlägt diese vor, zusätzlich einen Schauminhibitor der Brandschutzflüssigkeit hinzu zugeben. Hier werden insbesondere Silikonentschäumer eingesetzt. Verwendet wird vorzugsweise ein Feststoffanteil an Schauminhibitoren im Bereich von 0,1 bis 5 Gew-%.

Die Schauminhibitoren verhindern nicht nur das Schäumen des Brandschutzmittels, sodass dieses die zu schützenden oder zu löschenden Gegenstände besser benetzt, sondern haben auch eine wasserabweisende Wirkung. Sie behindern das Ablösen der aufgetragenen, angetrockneten Schicht des Brandschutzmittels durch Wasser oder Feuchtigkeit.

Insgesamt bilden sich auf der Oberfläche der Wolle, die mit dem Brandschutzmittel ausgerüstet sind, dünne, zähe Filme in Form einer geschlossenen Schicht. Diese Filme sind gegen Wasser beständig, jedenfalls deutlich beständiger als Filme ohne Zugabe eines Netzmittels.

Für die vorzugsweise als Schauminhibitoren eingesetzten Silikonentschäumer ist zwar bekannt, dass Silikon eine wasserabweisende Wirkung hat, es war aber nicht vorauszusehen und ist überraschend, dass bei dem erfindungsgemäßen Brandschutzmittel die Zugabe eines Silikonentschäumers oder eines anderen Schauminhibitors eine deutliche verbesserte Wetterfestigkeit bewirkt.

Neben Silikonentschäumern eignen sich als Schauminhibitoren auch Stearate wie beispielsweise Aluminiumstearat oder Zinkstearat.

Als Phosphat eignet sich für die Erfindung insbesondere das bereits erwähnt Diammoniumphosphat, weiterhin Diammoniumhydrogenphosphat, Guanidinphosphat, Dimelaminphosphat, Borphosphat, Dinatriumphosphat und Kuperhydroxyphosphat.

Einige dieser Phosphate haben die zusätzliche Wirkung, bei Zufuhr von Wärme aufzuschäumen, also eine intumeszierende Wirkung. Dies gilt beispielsweise für Dimelaminphosphat. Diese Wirkung tritt zusätzlich zu den bereits beschriebenen Wirkungen, also insbesondere der endothermen Reaktion unter Anwesenheit des Netzmittels, und der weiteren Vorteile die das Netzmittel bringt, auf.

In einer bevorzugten Ausführung ist das Netzmittel in einem Gewichtsanteil von 0,01 bis 1 Prozent in wässrigen Lösungen enthalten.

Der gewichtsmäßige Wasseranteil im erfindungsgemäßen Brandschutzmittel liegt über 50 %, vorzugsweise zwischen 62 und 95%, insbesondere bei 70 bis 80%. Das Brandschutzmittel ist ausgesprochen flüssig, es kann wie Wasser aufgetragen werden, insbesondere und vorzugsweise in Form eines feinen Nebels, wie er beispielsweise mit einer Zerstäuberspritze erreicht wird.

Nachfolgend werden einige Rezepte, die nur beispielhaft zu verstehen sind, aufgeführt, um die Zusammensetzung des erfindungsgemäßen Brandschutzmittels zu veranschaulichen:
1. Rezept: Vermischt wird ein Feststoffanteil von 38 Gewichts-Prozent mit 62 Gewichts-Prozent Wasser. Der Feststoffanteil hat folgende Zusammensetzung:
   97,9 Gewichts-Prozent Diammoniumphosphat
   2,0 Gewichts- Prozent Silikonentschäumer, wässrig, ca. 38 Gewichts-Prozent Feststoffgehalt und
   0,1 Gewichts-Prozent eines kationischen oder anionischen Tensids.
   Bewährt haben sich auch Mischungen verschiedener Phosphatsalze, so kann beispielsweise der angegebene Anteil an Diammoniumphosphat ersetzt werden durch 2/3 Diammoniumphosphat und 1/3 Guanidinphosphat oder 1/3 Diammoniumphosphat, 1/3 Guanidinphosphat und 1/3 Dimelaminphosphat.
2. Rezept: 18 Gewichts-Prozent Feststoffanteil werden mit 82 Gewichts-Prozent Wasser vermischt. Der Feststoffanteil setzt sich zusammen aus
   98,8 Gewichts-Prozent Guanidinphosphat
   1,0 Gewichts-Prozent Aluminiumstearat und
   0,2 Gewichts-Prozent Natriumsulfat.
3. Rezept: Es wird ein Extrakt hergestellt aus 38 Gewichts-Prozent Feststoffanteil und 62 Gewichts-Prozent Wasser, der Feststoffanteil besteht aus 98,9 Gewichts-Prozent Diammoniumphosphat
   0,9 Gewichts-Prozent Silikonentschäumer und
   0,2 Gewichts-Prozent eines Tensids.

Eine verstärkte Wasserabweisung des Dämmmaterials kann auch dadurch erreicht werden, dass weiterhin Polydimethylsiloxan als Emulsion (20-50%, vorzugsweise 33%) hinzugefügt wird.

Die Herstellung der Dämmmaterialien erfolgt vorzugsweise dadurch, dass eine geeignete Wolle in einer Flotte, bestehend aus den oben genannten Zusatzstoffen getränkt und anschließend getrocknet wird. Die Wolle kann dann je nach Bedarf gekämmt, gesteppt oder abgenäht und in gewünschte Größen zugeschnitten werden. Um die Flotte vor einem Verfaulen zu bewahren, kann ihr ein Konservierungsmittel, beispielsweise Kaliumsorbat, hinzugegeben werden.

Neben dem Tränken der Wolle in der Flotte ist es auch möglich, die einzelnen Bestandteile auf andere Arten hinzuzufügen. Denkbar ist ein Besprühen der Wolle mit einer Mischung der Zusatzstoffe, diese können aber auch nacheinander in jeweils geeigneten Verfahren aufgebracht werden. Denkbar ist z.B. auch, dass die Wolle zunächst nur in einigen Zusatzstoffen getränkt und anschließend mit anderen Zusatzstoffen besprüht wird.

Die Flotte kann beispielsweise die folgende Zusammensetzung aufweisen, wobei die prozentualen Anteile nur als Richtwerte zu verstehen sind:
80-100 % Wasser, vorzugsweise 95,86 %
1-2 % Kaliumsorbat, vorzugsweise 0,5 %
1-5 % Brandschutzmittel vorzugsweise 2%
0,2-2% Polydimethylsiloxan, Emulsion 33% vorzugsweise 0,8%
0,2-2% Nano-Siliciumdioxyd in Wasser, Korndurchmesser weniger 100 nm, vorzugsweise 0,8%
0,01-0,1% Lavendelöl (vorzugsweise 0,04% Lavendelöl)

Die Bestandteile müssen anteilig derart gemischt werden, dass sich 100% ergeben.

Anstelle von Nano-Siliciumdioxyd ist auch die Verwendung von entsprechend fein gemahlenem Glas, Ouarz oder Floatglas (sogenanntes Nanoglas) mit gleicher Partikelgröße möglich.

Die Partikelgröße ist mit weniger als 100 nm angegeben, vorzugsweise hat sich eine Partikelgröße von 30 nm als besonders wirksam erwiesen. Es ist andererseits aber auch möglich, Partikelgrößen im Micro-Bereich einzusetzen, da diese zwar schlechtere, aber noch ausreichende Wirkung erzielen.

Insbesondere kann es sinnvoll sein, das Brandschutzmittel auf die zuvor getränkten und getrockneten Matten aufzutragen bzw. aufzusprühen.

Die Wolle bzw. das Dämmmaterial kann weiterhin mit Kunststofffasern versehen werden, um ein gewünschtes Volumen zu erreichen und/oder die Wollfasern dauerhaft zu stützen.

Die Verwendung von Siliziumdioxid als Insektizid ist auch deshalb besonders vorteilhaft, weil es im Gegensatz zu handelsüblichen Pestiziden oder Fungiziden keine schädlichen Nebenwirkungen, für Mensch und Tier aufweist, insbesondere dünstet es nicht aus.

Die Erfindung ist nicht auf die beschriebenen Ausführungsbeispiele beschränkt, diese können vielmehr je nach Anwendungsfall beliebig variiert werden.

## Patentansprüche

1. Dämmmaterial, bestehend aus Wolle mit den folgenden Zusatzstoffen:
- Siliziumdioxid
- Brandschutzmittel mit mehr als 50 Gew.-% Wasser eines Phosphats und eines Netzmittels.

2. Dämmmaterial nach Anspruch 1, **dadurch gekennzeichnet, dass** als Wolle Schafwolle eingesetzt ist.

3. Dämmmaterial nach Anspruch 1 oder 2, **dadurch gekennzeichnet, dass** das Siliziumdioxid eine Korngröße von weniger als 100 nm aufweist.

4. Dämmmaterial nach einem der Ansprüche 1 bis 3, **dadurch gekennzeichnet, dass** weiterhin Polydimethylsiloxan enthalten ist.

5. Dämmmaterial nach einem der Ansprüche 1 bis 4, **dadurch gekennzeichnet, dass** weiterhin Lavendelöl enthalten ist.

6. Dämmmaterial nach einem der Ansprüche 1 bis 4, **dadurch gekennzeichnet, dass** Chrysanthemenöl enthalten ist.

7. Dämmmaterial nach einem der Ansprüche 1 bis 6, **dadurch gekennzeichnet, dass** weiterhin ein Konservierungsmittel enthalten ist.

8. Dämmmaterial nach einem der Ansprüche 1 bis 7, **dadurch gekennzeichnet, dass** das Brandschutzmittel zusätzlich einen Schauminhibitor aufweist, vorzugsweise 0,1 bis 5 Gewichtsprozent bezogen auf den Anteil an Phosphat.

9. Dämmmaterial nach einem der Ansprüche 1 bis 8, **dadurch gekennzeichnet, dass** das Netzmittel in einem Gewichtsanteil von 0,01 bis 1 Prozent bezogen auf den Anteil an Phosphat in der wässrigen Lösung enthalten ist.

10. Dämmmaterial nach einem der Ansprüche 1 bis 8, **dadurch gekennzeichnet, dass** der Anteil an Phosphat zwischen 5 und 38 Gewichtsprozent, vorzugsweise zwischen 10 und 22 Gewichtsprozent, insbesondere etwa 16 Gewichtsprozent beträgt.

11. Dämmmaterial nach einem der Ansprüche 1 bis 10, **dadurch gekennzeichnet, dass** das Phosphat ein Metallphosphat, Ammonium- und/oder Aminphosphat ist.

12. Dämmmaterial nach einem der Ansprüche 1 bis 11, **dadurch gekennzeichnet, dass** das Netzmittel ein anionisches oder kationisches Tensid und/oder ein Natriumsulfat ist.

13. Dämmmaterial nach einem der Ansprüche 1 bis 12, **dadurch gekennzeichnet, dass** sich das Phosphat von Orthophosphorsäure, Pyrophosphorsäure, Polyphosphorsäure, phosphoriger Säure oder Phosphinsäuren ableitet.

14. Dämmmaterial nach einem der Ansprüche 1 bis 13, **dadurch gekennzeichnet, dass** als Phosphat ein Diammoniumphosphat, Diammoniumhydrogenphosphat, Guadeninphosphat, Dimelaminphosphat, Bohrphosphat, Dinatriumphosphat, Kupferhydroxidphosphat oder eine beliebige Kombination dieser Phosphate eingesetzt wird.

15. Verfahren zu Herstellung eines Dämmmaterials nach einem der Ansprüche 1 bis 14, **gekennzeichnet durch** die Verfahrensschritte:
- Bereitstellen der Wolle,
- Mischen einer Flotte mit den Zuschlagstoffen,
- Tränken der Wolle in der Flotte,
- Trocknen der Wolle,
- Verarbeiten der Wolle zu Dämmmaterial.
